Europäisches Patentamt

European Patent Office

Office européen des brevets

(19)

(11) Publication number: **0 387 828**
**A2**

# EUROPEAN PATENT APPLICATION

(21) Application number: **90104807.4**

(22) Date of filing: **14.03.90**

(51) Int. Cl.⁵: **B01D 35/26**

(30) Priority: **16.03.89 IL 89639**

(43) Date of publication of application:
**19.09.90 Bulletin 90/38**

(84) Designated Contracting States:
**AT BE CH DE DK ES FR GB GR IT LI LU NL SE**

(71) Applicant: **Drori, Mordeki**
**89 Zahal Street**
**Kiron(IL)**

(72) Inventor: **Drori, Mordeki**
**89 Zahal Street**
**Kiron(IL)**

(74) Representative: **Kraus, Walter, Dr. et al**
**Patentanwälte Kraus, Weisert & Partner**
**Thomas-Wimmer-Ring 15**
**D-8000 München 22(DE)**

(54) **Apparatus for removal of contaminants.**

(57) Apparatus for removal of contaminants from a fluid including a backflushable filter having a filter element, a filter inlet coupled to an upstream side of the filter element and a filter outlet coupled to a downstream side of the filter element, pump apparatus having a pump inlet and a pump outlet, a drain, apparatus for selectably coupling the pump inlet to the drain; apparatus for coupling the pump outlet to the filter inlet; and apparatus for selectably coupling the upstream side of the filter element to the drain including apparatus for separating contaminants from a fluid flowing from the upstream side of the filter element to the drain.

EP 0 387 828 A2

## FIELD OF THE INVENTION

The present invention relates to fluid filtering systems generally and more particularly to apparatus and techniques for filtering out contaminants from a fluid.

## BACKGROUND OF THE INVENTION

The uncontrolled discharge of liquid pollutants has become not only an ecological problem but also an economic problem for many industries. Disposal of potentially harmful liquid pollutants is extremely expensive and sometimes prohibited or otherwise impossible.

Industry has long sought a solution to this problem. Despite advances in pollution control, however, industries are currently closing down due to intractable problems of liquid pollutant disposal.

## SUMMARY OF THE INVENTION

The present invention seeks to provide an economical solution to the problems of removal and disposal of contaminants from a fluid.

There is thus provided in accordance with a preferred embodiment of the present invention apparatus for removal of contaminants from a fluid including a backflushable filter having a filter element, a filter inlet coupled to an upstream side of the filter element and a filter outlet coupled to a downstream side of the filter element, pump apparatus having a pump inlet and a pump outlet, a drain, apparatus for selectably coupling the pump inlet to the drain; apparatus for coupling the pump outlet to the filter inlet; and apparatus for selectably coupling the upstream side of the filter element to the drain including apparatus for separating contaminants from a fluid flowing from the upstream side of the filter element to the drain.

The term "contaminant" is used herein in a broad sense and without implication as to the relative value of the fluid and the contaminant. Accordingly, the contaminant may be a dangerous substance which must be carefully disposed of or alternatively, the contaminant may be a precious metal, such as gold or silver, which it is sought to remove from a fluid stream.

Additionally in accordance with a preferred embodiment of the invention, the apparatus for selectably coupling the pump inlet is also operative to selectably couple the pump inlet to an external supply of fluid to be filtered.

Further in accordance with an embodiment of the present invention, the drain may comprise a tank. In this embodiment, there may also be provided apparatus for selectably coupling the pump outlet to the tank. Additionally in this embodiment there may also be provided apparatus for selectably coupling the filter outlet to the tank.

Additionally in accordance with an embodiment of the invention the apparatus for coupling the pump outlet to the filter inlet and the apparatus for selectably coupling the upstream side of the filter element to the drain are both embodied in valve apparatus for selectably coupling either the pump outlet to the filter inlet or the filter inlet to the drain.

In accordance with a preferred embodiment of the invention there is provided a method for removal of contaminants from a fluid including the steps of supplying a fluid to be filtered to a backflushable filter having a filter element, a filter inlet coupled to an upstream side of the filter element and a filter outlet coupled to a downstream side of the filter element, whereby contaminants are deposited in or upstream of the filter element; backflushing the backflushable filter so as to remove contaminants from the filter element and from the upstream side thereof thereby to provide a flow of a backflushing fluid containing contaminants to a drain via a contaminant separator, which removes contaminants from the flow of backflushing fluid; and supplying the backflushing fluid downstream of the contaminant separator to the upstream side of the filter element.

Additionally in accordance with a preferred embodiment of the invention, the method for removal of contaminants also includes the step of precoating the filter element with a filter cake.

Further in accordance with a preferred embodiment of the present invention there is also provided the additional step of regenerating the filter cake on the filter element.

In accordance with a preferred embodiment of the invention, the step of regenerating comprises the steps of interrupting the supply of fluid to be filtered to the filter element, connecting the filter outlet to a tank, providing a flow of backflushing fluid through the filter element from the downstream side to the upstream side, and subsequently supplying the contents of the tank to the filter inlet, thus circulating fluid through the filter element from the upstream side to the downstream side until the filter cake is built up.

## BRIEF DESCRIPTION OF THE DRAWINGS

The present invention will be understood and appreciated more fully from the following detailed description, taken in conjunction with the drawings in which:

Fig. 1 is a generalized pictorial illustration of a filtering system constructed and operative in accordance with a preferred embodiment of the present invention;

Fig. 2A is an illustration of the filter system of Fig. 1 arranged for mixing of a filter aid material;

Fig. 28 is an illustration of the filter system of Fig. 1 arranged for build up of a filter cake on the filter element;

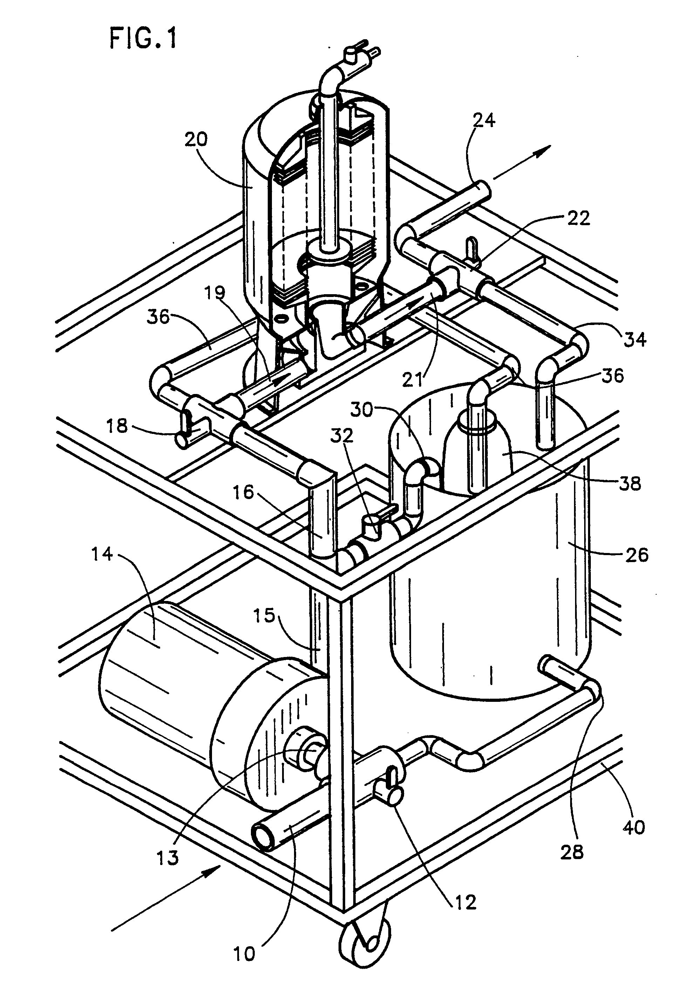

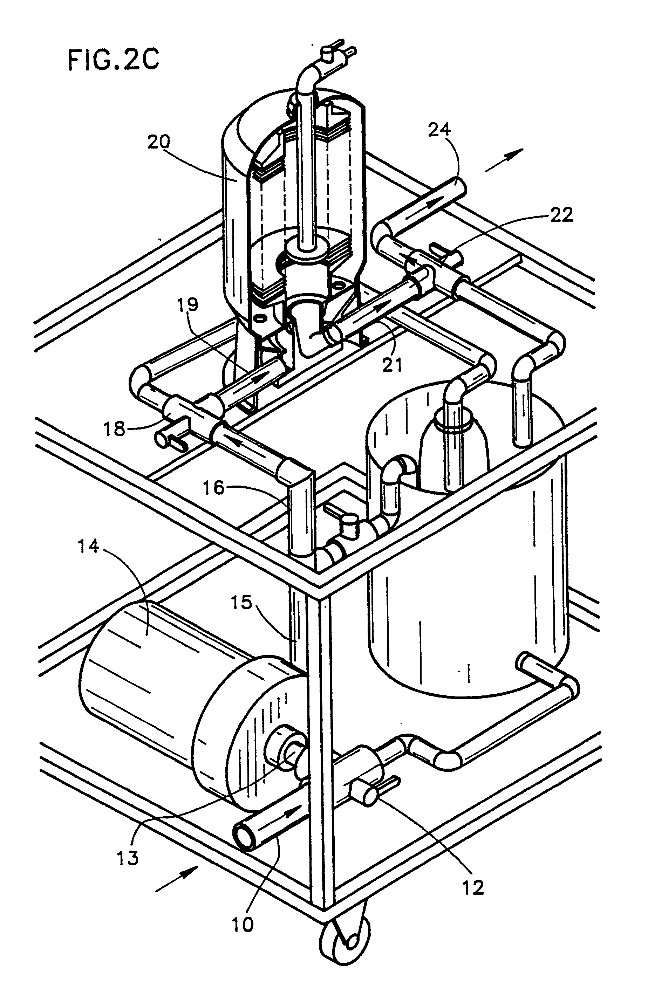

Fig. 2C is an illustration of the filter system of Fig. 1 arranged for normal filtering operation;

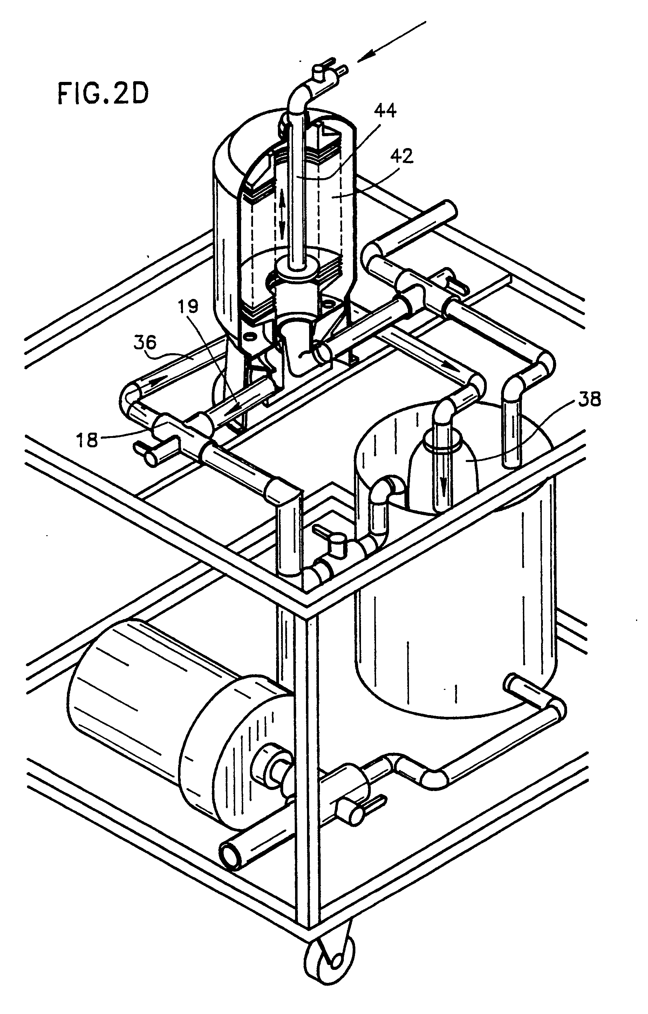

Fig. 2D is an illustration of the filter system of Fig. 1 arranged for backflushing operation;

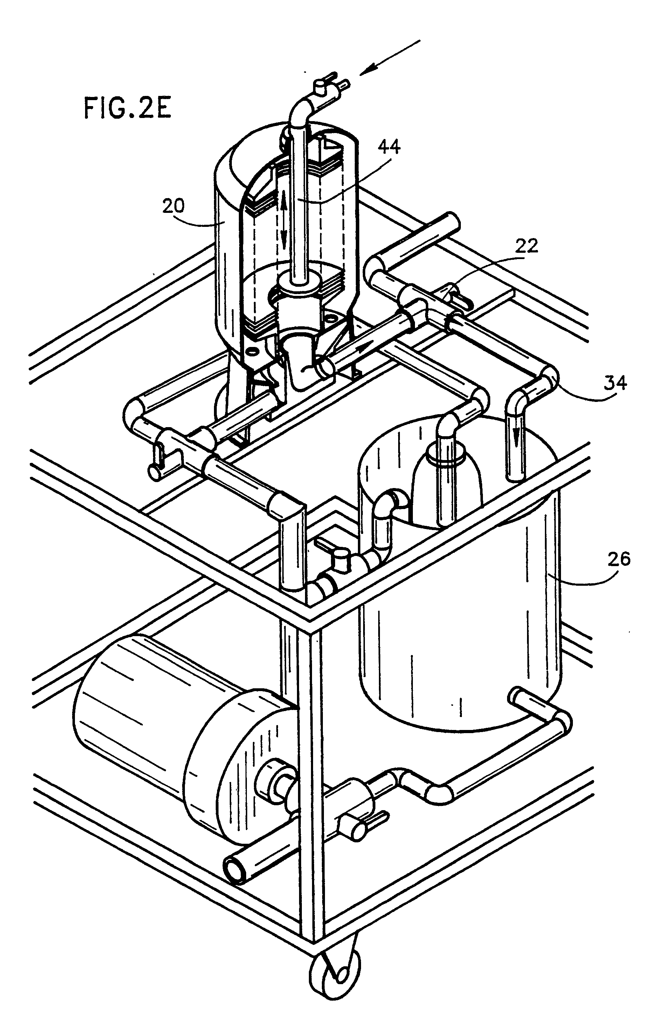

Fig. 2E is an illustration of the filter system of Fig. 1 arranged for an initial stage of regeneration operation;

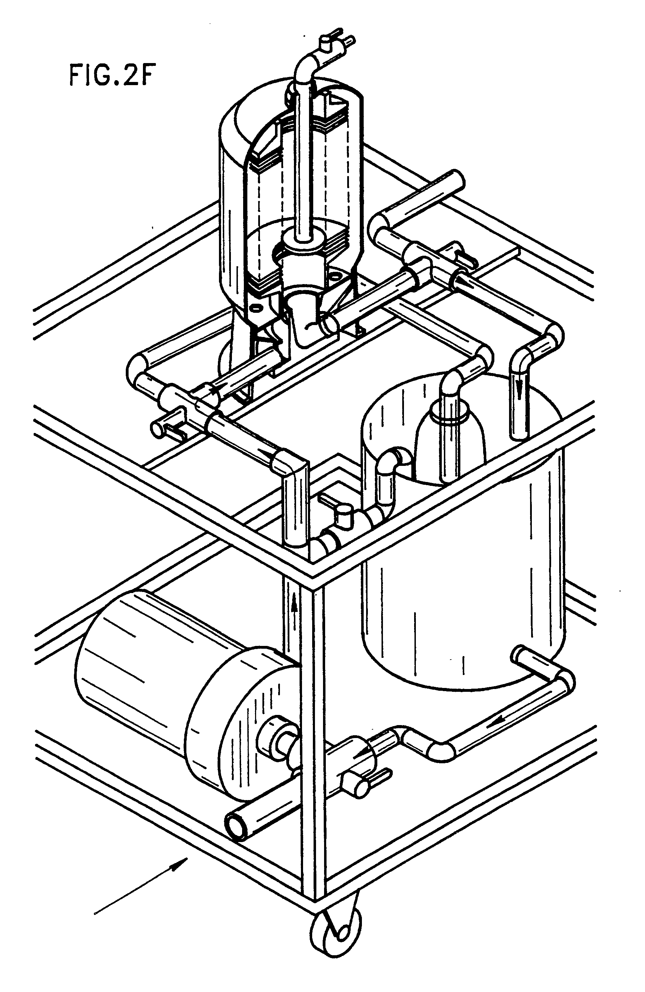

Fig. 2F is an illustration of the filter system of Fig. 1 arranged for a filter cake build up stage of regeneration operation;

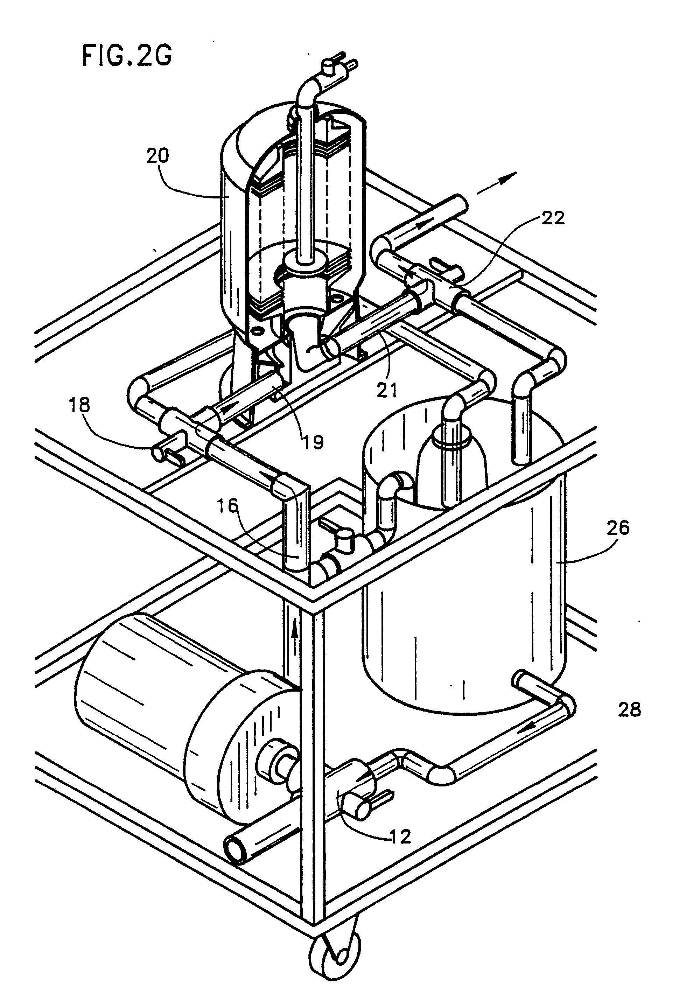

Fig. 2G is an illustration of the filter system of Fig. 1 arranged for recirculation of fluid from the tank through the backflushable filter; and

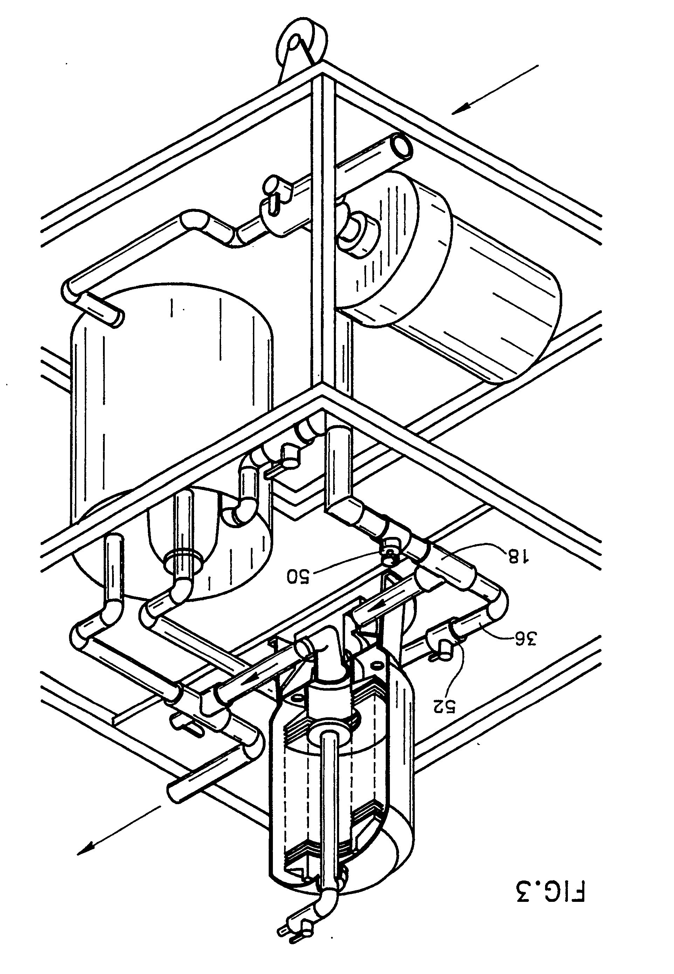

Fig. 3 is a generalized pictorial illustration of a filtering system constructed and operative in accordance with an alternative embodiment of the present invention.

## DETAILED DESCRIPTION OF A PREFERRED EMBODIMENT

Reference is now made to Fig. 1, which illustrates a filtering system constructed and operative in accordance with a preferred embodiment of the present invention. The filtering system comprises an inlet 10, which may be coupled to a source of a fluid, typically a liquid, to be filtered (not shown). The inlet 10 is coupled, preferably via a valve 12, to the inlet 13 of a pump 14, which may be any suitable conventional pump. Valve 12 and the other valves employed in the apparatus may be any suitable conventional manually or automatically operated valves. An outlet 15 of pump 14 is preferably coupled, by suitable piping 16 and via a valve 18, to the inlet 19 of a backflushable fluid filter 20. One preferred embodiment of a backflushable fluid filter 20 is described and claimed in Published European Patent Application 0284729 of the present inventor, the teachings of which are incorporated herein by reference.

An outlet 21 of filter 20 is coupled via a valve 22 to a filtered fluid outlet 24, which may be connected to utilization apparatus (not shown) as appropriate.

A tank 26 is preferably provided and has an outlet 28 adjacent the bottom thereof , which may be selectably connected by valve 12 to inlet 13 of pump 14. According to a preferred embodiment of the invention, wherein the fluid is a liquid, tank 26 is typically open to the atmosphere. Tank 26 may receive a fluid input via a conduit 30, which is selectably coupled to the outlet 15 of pump 14 by a valve 32. Alternatively or additionally, tank 26 may receive a fluid input via a conduit 34 which is selectably coupled to filter outlet 21 by valve 22. Alternatively or additionally, tank 26 may receive a backflush fluid input via a conduit 36 which is selectably coupled via valve 18 to the filter inlet 19, which, during backflushing, serves as a backflush outlet.

According to a preferred embodiment of the present invention, conduit 36 communicates with the interior of tank 26 via a contaminant impermeable, non-contaminated fluid permeable filter bag 38 or similar barrier, which collects concentrated contaminants in a solid or near solid form for relatively convenient disposal. Filter bag 38 may be made of any suitable conventional filtering material suitable for the contaminant involved.

The filter system described above may be relatively small and accordingly may preferably be mounted, as illustrated in Fig. 1, on a wheeled carriage 40.

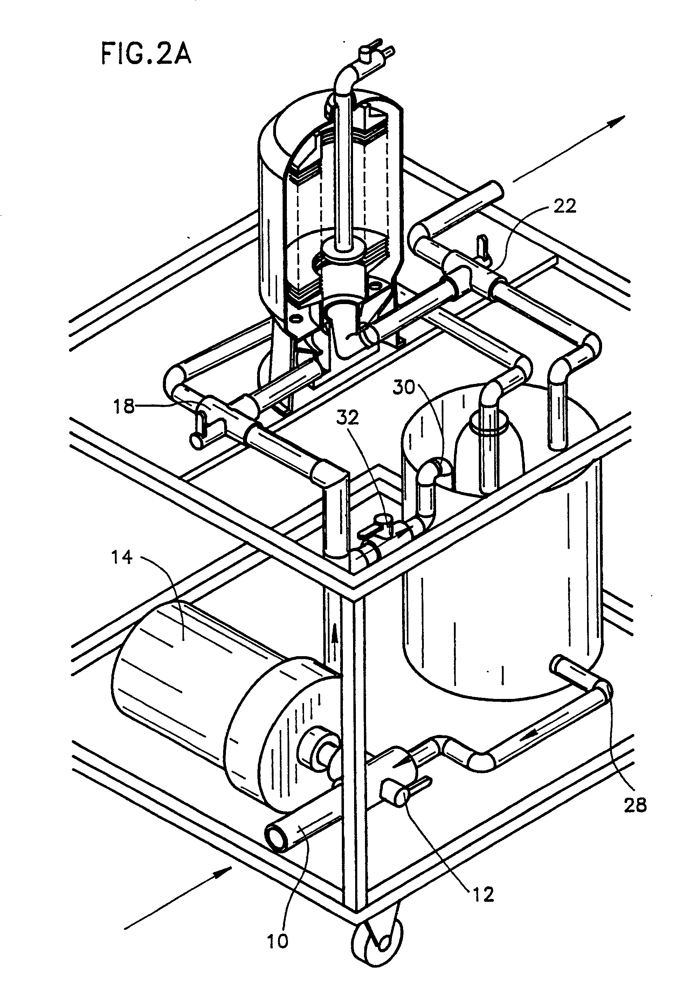

The operation of the apparatus of Fig. 1 in various modes of operation will now be described with particular reference to Figs. 2A - 2G.

Fig. 2A illustrates a prefiltration stage wherein filter aid material is mixed in tank 26. In this mode of operation a liquid to be filtered is circulated through tank 26 via inlet 10, valve 12, pump 14, valve 32, conduit 30 and conduit 28, typically in a direction indicated by the arrows in Fig. 2A. A filter aid, such as diatomaceous earth or any other suitable filter aid, may be added to tank 26 and is thus dispersed in the circulating liquid.

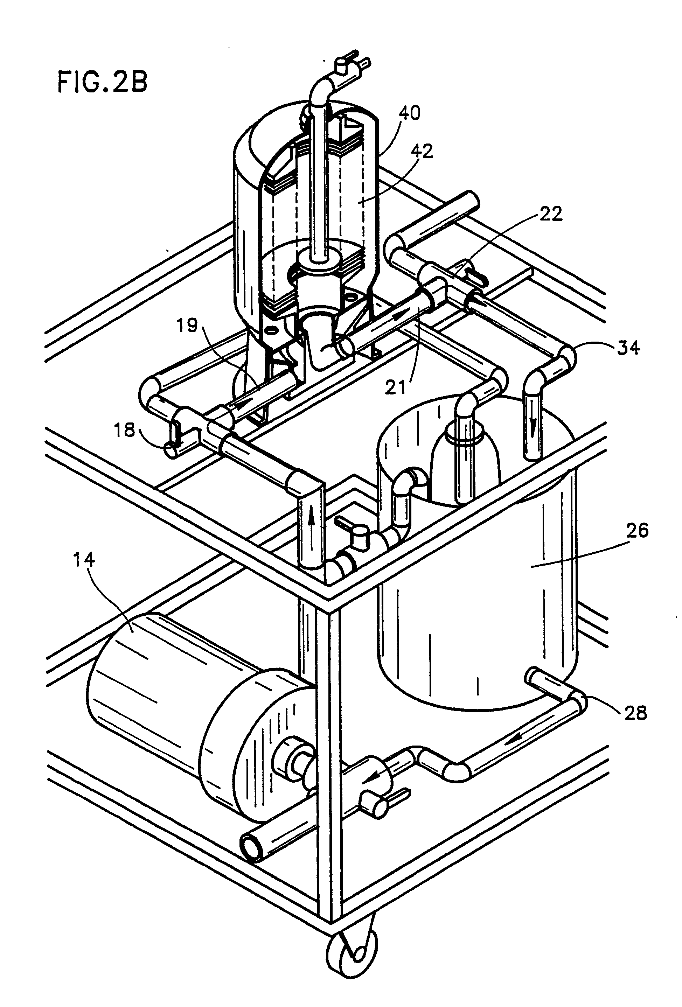

Following the step of mixing the filter aid material, as illustrated in Fig. 2A, a filter cake is built up on the upstream side of a filter element 42 forming part of filter 20, by an operation illustrated in Fig. 2B. Here valve 32 is closed, causing liquid to be forced by pump 14 to pass along piping 16 and via valve 18 through inlet 19 into filter 20, and to pass through the filter element 42, from the upstream side to the downstream side and out through outlet 21, thus building up a filter cake on the upstream side of filter element 42.

From the outlet 21, the circulating liquid passes via valve 22 and conduit 34 back to tank 26, the circulation path being illustrated by the arrows in Fig. 2B. The operation illustrated in Fig. 28 continues until a sufficient filter cake is built up in filter 20.

Following build up of the filter cake, normal filtering operation of the filter system may take place, as illustrated in Fig. 2C. Here liquid is supplied via inlet 10, valve 12, pump inlet 13, pump 14, pump outlet 15, piping 16, valve 18, inlet 19, filter 20, filter outlet 21 and valve 22 to filtered fluid outlet 24.

At suitable intervals, which may be determined as a function of quantities of fluid passing through the filter or by current filter performance, for example, normal filtering operation of the type illustrated in Fig. 2C may be terminated and a backflushing operation may be undertaken, as illustrated in Fig. 2D.

During backflushing, a backflushing fluid is supplied to a backflushing unit 44, forming part of filter 20, from any suitable pressurized source. The backflushing unit 44 is operated to provide a flow of backflushing fluid from a downstream side to an upstream side of the filter element 42 along generally the entire surface area thereof, by suitable axial displacement and rotation of the backflushing unit 44.

Backflush liquid containing contaminants leaves filter 20 via inlet 19, which in this mode operates as a backflush fluid outlet. The backflush liquid passes from inlet 19 via valve 18 and conduit 36 via contaminant impermeable bag 38, which collects and concentrates solid contaminants, removing them from the backflush liquid which is collected in tank 26.

Reference is now made to Fig. 2E, which illustrates an initial stage of regeneration, a procedure which may be used to increase filter efficiency without backflushing. Such a procedure may be carried out multiple times between backflushings when it is desired to reorient the filter cake and thus renew its full effectiveness.

In the initial stage of regeneration illustrated in Fig. 2E, a fluid is supplied under pressure to the backflushing unit 44, causing at least partial dislodging of the filter cake from the upstream side. As a result, part of the filter cake falls to the bottom of the upstream side of the filter 20, as illustrated. Fluid drains from the downstream side of the filter 20 via outlet 21, valve 22 and conduit 34 to tank 26.

Following the regeneration stage illustrated in Fig. 2E, liquid is again circulated through the filter along a path illustrated by the arrows in Fig. 2F. The circulation path is identical to that illustrated in Fig. 28 and described above and is effective to build up the filter cake using the filter aid material already inside the filter 20.

Following backflushing as illustrated in Fig. 2D, the liquid collected in tank 26 may be recirculated through the filter 20 as illustrated in Fig. 2G. Here it is seen that the liquid from tank 26 passes via conduit 28, valve 12, pump 14, piping 16, valve 18, inlet 19, filter 20, outlet 21, valve 22 and outlet 24.

It will be appreciated that it is a particular feature of the present invention that it enables contaminants to be collected in a very compact and relatively easy to dispose form.

Reference is now made to Fig. 3 which illustrates an alternative embodiment of the apparatus of Fig. 1. The apparatus of Fig. 3 is distinguished from that of Fig. 1 in that a gate valve 50 is provided between pump 14 and valve 18 and a drain valve 52 is provided along conduit 36 between valve 18 and tank 26. The provision of these additional valves enables enhanced control of the rate of flow of fluids through the filter 20. In particular, valve 50 enables a relatively low rate flow of liquid through the filter 20 to be realized.

It will be appreciated by persons skilled in the art that the present invention is not limited by what has been particularly shown and described hereinabove. Rather the scope of the present invention is defined only by the claims which follow:

## Claims

1. Apparatus for removal of contaminants from a fluid comprising:
a backflushable filter having a filter element;
a filter inlet coupled to an upstream side of the filter element;
a filter outlet coupled to a downstream side of the filter element;
pump means having a pump inlet and a pump outlet;
a drain;
means for selectably coupling the pump inlet to the drain;
means for coupling the pump outlet to the filter inlet; and
means for selectably coupling the upstream side of the filter element to the drain including means for separating contaminants from a fluid flowing from the upstream side of the filter element to the drain.

2. Apparatus according to claim 1 and wherein said means for selectably coupling the pump inlet is also operative to selectably couple the pump inlet to an external supply of fluid to be filtered.

3. Apparatus according to either of the preceding claims and wherein said drain comprises a tank.

4. Apparatus according to claim 3 and also comprising means for selectably coupling the pump outlet to the tank.

5. Apparatus according to either of claims 3 or 4 and also comprising means for selectably coupling the filter outlet to the tank.

6. Apparatus according to any of the preceding claims and wherein said means for coupling the pump outlet to the filter inlet and said means for selectably coupling the upstream side of the filter element to the drain are both embodied in valve means for selectably coupling either the pump outlet to the filter inlet or the filter inlet to the drain.

7. A method for removal of contaminants from a fluid including the steps of:
supplying a fluid to be filtered to a backflushable filter having a filter element, a filter inlet coupled to an upstream side of the filter element and a filter outlet coupled to a downstream side of the filter element, whereby contaminants are deposited in or upstream of the filter element;
backflushing the backflushable filter so as to remove contaminants from the filter element and from the upstream side thereof thereby to provide a flow of a backflushing fluid containing contaminants to a drain via a contaminant separator, which removes contaminants from the flow of backflushing fluid; and
supplying the backflushing fluid downstream of the contaminant separator to the upstream side of the filter element.

8. A method according to claim 7 and also including the step of precoating the filter element with a filter cake.

9. A method according to claim 7 or claim 8 and also comprising the step of regenerating the filter cake on the filter element.

10. A method according to claim 9 and wherein said step of regenerating comprises the steps of:
interrupting the supply of fluid to be filtered to the filter element;
connecting the filter outlet to a tank;
providing a flow of the backflushing fluid through the filter element from the downstream side to the upstream side; and subsequently supplying the contents of the tank to the filter inlet, thus circulating fluid through the filter element from the upstream side to the downstream side until the filter cake is built up.

FIG.1

FIG.2A

FIG.2B

FIG.2C

FIG.2D

FIG.2E

FIG.2F

FIG.2G

FIG.3